# EUROPÄISCHE PATENTSCHRIFT

(11) **EP 3 743 312 B1**
(45) Veröffentlichungstag und Bekanntmachung des Hinweises auf die Patenterteilung: **12.03.2025**
(21) Anmeldenummer: 19700666.1
(22) Anmeldetag: 10.01.2019
(51) Int. Cl.: B60R 1/00, H04N 7/18

(54) **KAMERA-MONITOR-SYSTEM SOWIE VERFAHREN UND VORRICHTUNG ZUM BETREIBEN EINES KAMERA-MONITOR-SYSTEMS FÜR EIN KRAFTFAHRZEUG**
METHOD AND DEVICE FOR OPERATING A VIDEO MONITORING SYSTEM FOR A MOTOR VEHICLE
MÉTHODE ET DISPOSITIF POUR OPÉRER UN SYSTÈME DE VIDÉO SURVEILLANCE POUR UN VÉHICULE MOTORISÉ

(30) Priorität: 23.01.2018 DE 102018201027
(43) Veröffentlichungstag der Anmeldung: 02.12.2020
(73) Patentinhaber: Continental Automotive Technologies GmbH, 30175 Hannover (DE)
(72) Erfinder: SMITS, Thomas, 47638 Straelen (DE)
(74) Vertreter: Continental Corporation
(86) Internationale Anmeldenummer: PCT/EP2019/050574
(87) Internationale Veröffentlichungsnummer: WO 2019/145161

(56) Entgegenhaltungen:
- WO-A1-2016/026870
- DE-A1- 102015 214 611
- US-A1- 2008 044 061
- US-A1- 2016 366 336
- US-A1- 2017 341 583

## Beschreibung

Die Erfindung betrifft ein Kamera-Monitor-System für ein Kraftfahrzeug, insbesondere für ein Kraftfahrzeug mit einem Anhänger. Die Erfindung betrifft weiterhin ein Verfahren zum Betreiben eines Kamera-Monitor-Systems für ein Kraftfahrzeug sowie eine Vorrichtung, die dazu ausgebildet ist, das Verfahren durchzuführen.

Kraftfahrzeuge, beispielsweise Lastkraftwagen und Personenkraftwagen, weisen herkömmlich Außenspiegel auf. Es sind auch Spiegelersatzsysteme bekannt, bei denen mittels einer Kamera und eines Monitors die Sichtbereiche der üblichen Außenspiegel abgebildet werden. Solche Spiegelersatzsysteme werden auch als Kamera-Monitor-Systeme bezeichnet.

Ein Verfahren und eine Vorrichtung zum Betreiben eines Kamera-Monitor-Systems ist beispielsweise aus der WO 2016/026870 A1 bekannt. Die WO 2016/026870 A1 offenbart ein Anzeigesystem zum Erzeugen einer zusammengesetzten Ansicht eines Bereichs hinter einem Fahrzeug, das einen Anhänger zieht. Das Anzeigesystem umfasst eine erste Kamera zum Ausgeben erster Bilddaten, die einem ersten Bild entsprechen, wobei die erste Kamera so konfiguriert ist, dass sie in einer nach hinten gerichteten Ausrichtung an dem Fahrzeug angebracht ist. Weiter umfasst das Anzeigesystem eine zweite Kamera zum Ausgeben von zweiten Bilddaten, die einem zweiten Bild entsprechen, wobei die zweite Kamera so konfiguriert ist, dass sie in einer nach hinten gerichteten Ausrichtung an dem Anhänger angebracht ist.

Die US 2008/044061 A1 offenbart eine Vorrichtung und ein Verfahren zur Anzeige eines Bildes, das ein Sichtfeld der Umgebung eines verbundenen Fahrzeugs darstellt, das aus einer Zugmaschine und einem Anhänger besteht, auf einer Anzeigevorrichtung im Inneren der Zugmaschine.

Die US 2017/341583 A1 bezieht sich auf Systeme und Verfahren für ein Zugfahrzeug und einen Anhänger mit Rundumsicht-Bildgebungsgeräten zur Bestimmung der Dynamik von Zugfahrzeug und Anhänger, Erzeugung einer Ansicht des Hecks eines Zugfahrzeugs mit einem transparenten Anhänger und Generierung einer 360-Grad-Rundumsicht aus der Vogelperspektive auf das Zugfahrzeug und/oder den Anhänger.

Die US 2016/366336 A1 offenbart ein System und Verfahren, welche das Erzeugen eines Rundumansichtsbildes für ein gelenkiges Nutzfahrzeug mit austauschbaren Fahrzeugsegmenten erleichtern.

Die DE 10 2015 214611 A1 offenbart ein Verfahren und eine Vorrichtung zum Anzeigen einer Umgebungsszene eines Fahrzeuggespanns. Darüber hinaus wird ein Surround-View-System für ein Fahrzeuggespann beschrieben.

Es ist wünschenswert, ein Verfahren zum Betreiben eines Kamera-Monitor-Systems für ein Kraftfahrzeug anzugeben, das einen zuverlässigen Betrieb insbesondere mit einem Anhänger des Kraftfahrzeugs ermöglicht. Es ist weiterhin wünschenswert, eine Vorrichtung zum Betreiben eines Kamera-Monitor-Systems anzugeben, die einen verlässlichen Betrieb ermöglicht. Es ist weiterhin wünschenswert, ein Kamera-Monitor-System anzugeben, das einen verlässlichen Betrieb insbesondere an einem Anhänger ermöglicht.

Die Erfindung zeichnet sich aus durch ein Verfahren nach Patentanspruch 1 zum Betreiben eines Kamera-Monitor-Systems für ein Kraftfahrzeug mit einem Anhänger sowie durch eine korrespondierende Vorrichtung nach Patentanspruch 7, die ausgebildet ist, das Verfahren auszuführen.

Erfindungsgemäß weist das Kamera-Monitor-System eine Kamera auf, die einer Rückseite des Anhängers zugeordnet ist. Die Kamera ist dazu ausgebildet, an der Rückseite des Anhängers montiert zu werden, um eine Umgebung an der Rückseite des Anhängers aufzuzeichnen. Das Kamera-Monitor-System weist eine weitere Kamera auf, die einer Seite des Kraftfahrzeugs zugeordnet ist. Die Seite ist insbesondere eine Längsseite, die sich in normaler Fahrtrichtung zwischen der vorderen Frontscheibe des Kraftfahrzeugs und einem hinteren Ende des Anhängers erstreckt. Die weitere Kamera ist insbesondere dazu ausgebildet, ein Bild der Umgebung des Kraftfahrzeugs im Bereich der Seite des Kraftfahrzeugs bereitzustellen.

Das Kamera-Monitor-System weist zudem einen Monitor zum Darstellen von Bildern der Kameras auf.

Ein Bild der Kamera wird bereitgestellt. Ein weiteres Bild der weiteren Kamera wird bereitgestellt. Ein Gesamtbild aus dem Bild und dem weiteren Bild wird in Abhängigkeit von einer ermittelten Trajektorie des Kraftfahrzeugs ermittelt. Das Gesamtbild wird auf dem Monitor dargestellt.

Das Verfahren ermöglicht somit eine Kombination der Kamera, die auch als Rückfahrkamera bezeichnet werden kann, und der weiteren Kamera, die beispielsweise Teil eines Spiegelersatzsystems zum Ersetzen eines herkömmlichen Außenspiegels ist. Es ist kein zusätzlicher Monitor notwendig, um das Bild der Kamera im Fahrzeug darzustellen. Das Bild der Kamera wird gemeinsam mit dem weiteren Bild der weiteren Kamera auf dem Monitor des Spiegelersatzsystems dargestellt. Der Monitor ist beispielsweise in einem seitlichen Bereich des Kraftfahrzeugs angeordnet. Somit ist auch bei dem Kraftfahrzeug mit Anhänger die dargestellte Umgebung von einem Nutzer intuitiv erfassbar. Insbesondere sind Bereiche in dem Monitor abbildbar, die mit einem herkömmlichen Spiegelersatzsystem oder herkömmlichen Außenspiegel nicht abbildbar sind.

Der Bereich hinter dem Anhänger wird einsehbar. Dabei sind gesetzliche Vorgaben für die Position des Monitors als Ersatz für einen herkömmlichen Außenspiegel erfüllbar.

Der Fahrer muss nicht auf einen weiteren separaten Monitor blicken, der beispielsweise mittig im Fahrzeug angeordnet ist, um den rückwärtigen Bereich hinter dem Anhänger einsehen zu können. Somit wird die Nutzung für den Fahrer komfortabler. An den beiden Monitoren, die den linken und rechten herkömmlichen Außenspiegel ersetzen, ist beim Rückwärtsfahren beispielsweise der kurveninnere Bereich und der kurvenäußere Bereich sowie der rückwärtige Bereich ersichtlich. Der rückwärtige Bereich ist somit komfortabel und intuitiv erfassbar. Hierfür ist insbesondere kein separater Monitor zur Darstellung des hinteren Bereichs notwendig. Optional ist ein weiterer Monitor beispielsweise im mittleren Bereich des Kraftfahrzeugs möglich. Der Fahrer kann so komfortabel den hinteren Bereich einsehen, ohne auf einen weiteren Monitor schauen zu müssen.

Das Kraftfahrzeug ist beispielsweise ein Lastkraftwagen mit Anhänger, beispielsweise eine Zugmaschine mit Auflieger. Das Kraftfahrzeug kann auch ein Lastkraftwagen mit Deichselanhänger und/oder ein Bus mit Anhänger sein. Das Kraftfahrzeug ist gemäß weiteren Ausführungsbeispielen alternativ oder zusätzlich ein Personenkraftwagen mit Anhänger.

Die Berücksichtigung der Trajektorie des Kraftfahrzeugs ermöglicht ein Adaptieren der Darstellung des Bildes und des weiteren Bildes passend zur jeweiligen Fahrsituation. Beispielsweise wird das dargestellte Gesamtbild abhängig vom Knickwinkel zwischen einem Zugfahrzeug des Kraftfahrzeugs und dem Anhänger adaptiert.

Gemäß zumindest einer weiteren Ausführungsform umfasst das Ermitteln der Trajektorie ein Ermitteln einer Geschwindigkeit des Kraftfahrzeugs. Alternativ oder zusätzlich umfasst das Ermitteln der Trajektorie ein Ermitteln eines Lenkwinkels.

Alternativ oder zusätzlich umfasst das Ermitteln der Trajektorie ein Ermitteln einer Gierrate des Zugfahrzeugs. Somit ist es möglich, in Abhängigkeit des Fahrzustands des Kraftfahrzeugs das Bild und das weitere Bild so zum Gesamtbild zusammenzufügen, dass ein gewünschter Ausschnitt aus der Umgebung am Monitor dargestellt wird.

Gemäß zumindest einer Ausführungsform werden das Bild und das weitere Bild mittels Stitching zusammengefügt. Somit werden das Bild und/oder das weitere Bild so verzerrt, dass ein zusammenhängendes Gesamtbild am Monitor dargestellt wird.

Gemäß zumindest einer Ausführungsform werden das Bild und das weitere Bild so zusammengefügt, dass im Gesamtbild ein Sichtbereich dargestellt wird, der sich aus einem Sichtbereich der Kamera und einem Sichtbereich der weiteren Kamera zusammensetzt. Insbesondere wird der Sichtbereich der weiteren Kamera durch den Sichtbereich der Kamera ergänzt. Der Sichtbereich der weiteren Kamera entspricht beispielsweise im Wesentlichen dem Sichtbereich der herkömmlichen Außenspiegel auf einer Seite. Dieser Sichtbereich wird durch den Sichtbereich der Kamera ergänzt, der der Rückseite des Anhängers zugeordnet ist. Somit ist es beispielsweise möglich, den Anhänger auf dem Monitor im Gesamtbild teilweise transparent darzustellen. Zusätzlich zur Darstellung der Umgebung seitlich des Kraftfahrzeugs.

Gemäß zumindest einer weiteren Ausführungsform werden das Bild und das weitere Bild so zusammengefügt, dass im Gesamtbild ein Sichtbereich dargestellt wird, der sich aus einem Sichtbereich der Kamera und einem Teilbereich des Sichtbereichs der weiteren Kamera zusammensetzt. Insbesondere bei Kurvenfahrten wird der Sichtbereich der weiteren Kamera von dem Anhänger selbst bedeckt. Dieser Teil des Sichtbereichs wird beispielsweise nicht im Gesamtbild dargestellt. Es wird der Teilbereich des Sichtbereichs der weiteren Kamera dargestellt, der weiterhin die Umgebung neben dem Anhänger abbildet. Dieser Teilbereich wird durch den Sichtbereich der Kamera ergänzt, sodass insgesamt der herkömmliche Sichtbereich der weiteren Kamera bei einem Knickwinkel von 0° simulierbar ist.

Die Kamera ist als abnehmbare Kamera ausgebildet. Die Kamera ist zerstörungsfrei am Anhänger montierbar und wieder abmontierbar. Somit ist es möglich, das Verfahren und das Kamera-Monitor-System auch in Kraftfahrzeugen zu verwenden, die nicht von Haus aus mit einer Kamera an der Rückseite des Anhängers ausgestattet sind. Zum Kalibrieren wird ein vorgegebener Bildinhalt in dem Bild und in dem weiteren Bild jeweils ermittelt. Eine Position der Kamera relativ zu der weiteren Kamera wird in Abhängigkeit von dem ermittelten Bildinhalt ermittelt. Somit ist es möglich, Toleranzen bei der Montage der abnehmbaren Kamera auszugleichen.

Gemäß zumindest einer Ausführungsform umfasst das Ermitteln des Bildinhalts ein Ermitteln von Seitenkanten des Anhängers in dem Bild und in dem weiteren Bild. Alternativ oder zusätzlich werden Seitenleuchten des Anhängers jeweils in dem Bild und dem weiteren Bild ermittelt. Alternativ oder zusätzlich werden gut erkennbare, markante Punkte der Umgebung verwendet, die in dem Bild und dem weiteren Bild abgebildet sind. Es ist auch möglich, das Kalibrieren der Kamera und der weiteren Kamera mittels Kalibrierpunkte in einer Werkstattumgebung durchzuführen.

Das Kamera-Monitor-System umfasst die Kamera, die weitere Kamera, den Monitor sowie die Vorrichtung, die ausgebildet ist, ein Verfahren gemäß zumindest einer Ausführungsform durchzuführen.

Vorteile, Merkmale und Weiterbildungen, die für das Verfahren beschrieben sind, gelten auch für die Vorrichtung und das System und umgekehrt.

Weitere Vorteile, Merkmale und Weiterbildungen ergeben sich aus den nachfolgenden, in Verbindung mit den Figuren erläuterten Beispielen. Gleiche, gleichartige und gleichwirkende Elemente können figurenübergreifend mit den gleichen Bezugszeichen versehen sein.

Es zeigen:
Figur 1 eine schematische Darstellung eines Kraftfahrzeugs mit einem Kamera-Monitor-System gemäß einem Ausführungsbeispiel,
Figur 2 eine schematische Darstellung des Kraftfahrzeugs, und
Figur 3 eine schematische Darstellung des Kraftfahrzeugs.

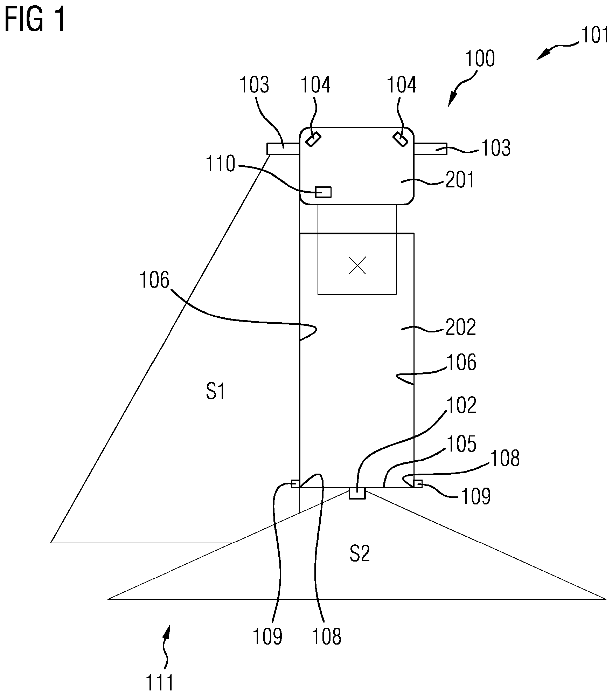

Figur 1 zeigt eine schematische Darstellung eines Kraftfahrzeugs 101 gemäß einem Ausführungsbeispiel. Das Kraftfahrzeug 101 ist beispielsweise ein Lastkraftwagen mit einem Zugfahrzeug 201 und einem Anhänger 202. Gemäß weiteren Ausführungsbeispielen ist das Kraftfahrzeug 101 ein Bus und/oder Personenkraftwagen mit einem Anhänger 202.

Das Kraftfahrzeug 101 weist ein Kamera-Monitor-System 100 als Spiegelersatzsystem auf. Das Kamera-Monitor-System 100 weist je Längsseite 106 des Kraftfahrzeugs 101 eine Kamera 103 auf. Die Kameras 103 dienen dazu, eine jeweilige seitliche Umgebung 111 der jeweiligen zugeordneten Seite 106 aufzunehmen.

Das Kamera-Monitor-System 100 weist zwei Monitore 104 auf, die jeweils einer der Seiten 106 zugeordnet sind. Im Betrieb wird ein Ausschnitt der Umgebung 111 auf dem jeweiligen zugeordneten Monitor 104 dargestellt. Insbesondere wird ein Sichtbereich S1 der Kamera 103 ganz oder teilweise auf dem zugeordneten Monitor 104 dargestellt, um die gesetzlich vorgeschriebenen Sichtfeldklassen darzustellen, beispielsweise die Sichtfeldklassen 2, 4 und 5. Das Bild, das auf dem Monitor 104 dargestellt wird, ist insbesondere dazu eingerichtet, ein Spiegelbild eines herkömmlichen Außenspiegels darzustellen und insbesondere weitere Ausschnitte aus der Umgebung 111 darzustellen, die mit herkömmlichen Außenspiegeln nicht abbildbar sind.

Eine Vorrichtung 110 ist vorgesehen, die mit den Kameras 103 und den Monitoren 104 signaltechnisch gekoppelt ist. Die Vorrichtung 110 ist eingerichtet, sowohl die Kameras 103 als auch die Monitore 104 zu steuern. Beispielsweise ist die Vorrichtung 110 ein Steuergerät oder ein Teil eines Steuergeräts des Kraftfahrzeugs 101.

Eine zusätzliche Kamera 102 ist an einer Rückseite 105 des Anhängers 202 angeordnet. Die Rückseite 105 des Anhängers 202 ist im normalen Betrieb dem Zufahrzeug 201 abgewandt. Die Kamera 102 ist signaltechnisch mit der Vorrichtung 110 gekoppelt. Die Vorrichtung 110 ist eingerichtet, die Kamera 102 zu steuern. Beispielsweise ist die Kamera 102 drahtlos mit der Vorrichtung 110 signaltechnisch verbunden. Auch eine Verbindung mittels Kabel ist möglich.

Die Vorrichtung 110 ist gemäß Ausführungsbeispielen ein zu den Kameras 102, 103 und den Monitoren 104 separates Bauelement. Gemäß weiteren Ausführungsbeispielen ist die Vorrichtung 110 ein Bestandteil zumindest einer der Kameras 102, 103 und/oder zumindest eines der Monitore 104.

Die Kamera 102, die auch als Rückfahrkamera bezeichnet werden kann, ist beispielsweise eine mobile Kamera. Die mobile Kamera 102 ist an dem Anhänger 202 montierbar und wieder zerstörungsfrei abnehmbar und beispielsweise an einem anderen Anhänger 202 montierbar. Gemäß weiteren Ausführungsbeispielen ist die Kamera 102 fest am Anhänger 202 montiert.

Die Kamera 102 ist eingerichtet, einen Bereich der Umgebung 111 hinter dem Anhänger 202 zu erfassen. Ein Sichtbereich S2 der Kamera 102 erfasst die Umgebung 111 hinter dem Anhänger 202. Der Sichtbereich S2 ist insbesondere ein dem Zugfahrzeug 101 abgewandter Bereich.

Das Kamerabild der Kamera 102 wird drahtgebunden oder drahtlos zu der Vorrichtung 110 im Zugfahrzeug 201 übertragen. Ein Bild der Kamera 102 wird auf dem Monitor 104 des Spiegelersatzsystems dargestellt. Beispielsweise ist der Monitor 104 ein bereits vorhandener Monitor eines Spiegelersatzsystems.

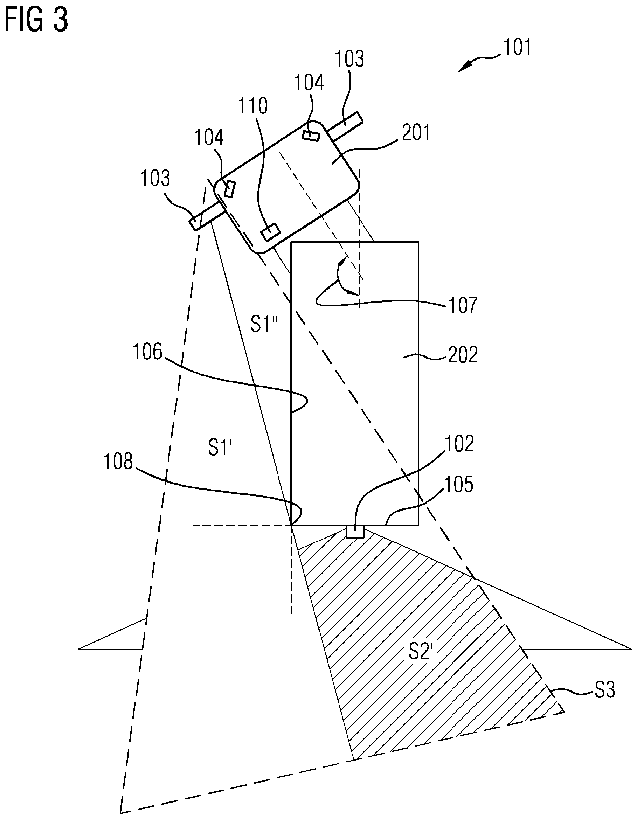

Der im Vergleich zum herkömmlichen Spiegelersatzsystem zusätzliche Sichtbereich S2 wird mit dem Sichtbereich S1 adaptiv kombiniert, beispielsweise mittels Stitching. Hierzu ermittelt die Vorrichtung 110 insbesondere die Trajektorie des Kraftfahrzeugs 101. Hierbei wird beispielsweise die Geschwindigkeit des Kraftfahrzeugs 101 berücksichtigt. Beispielsweise wird die Geschwindigkeit aus CAN-Informationen ermittelt (CAN: controller area network). Alternativ oder zusätzlich wird ein Lenkwinkel des Kraftfahrzeugs 101 berücksichtigt. Alternativ oder zusätzlich wird ein Knickwinkel 107 (Figur 3) und/oder eine Gierrate berücksichtigt. Die Gierrate wird beispielsweise mittels eines Gyroskopsensors oder eines anderen Steuergeräts ermittelt.

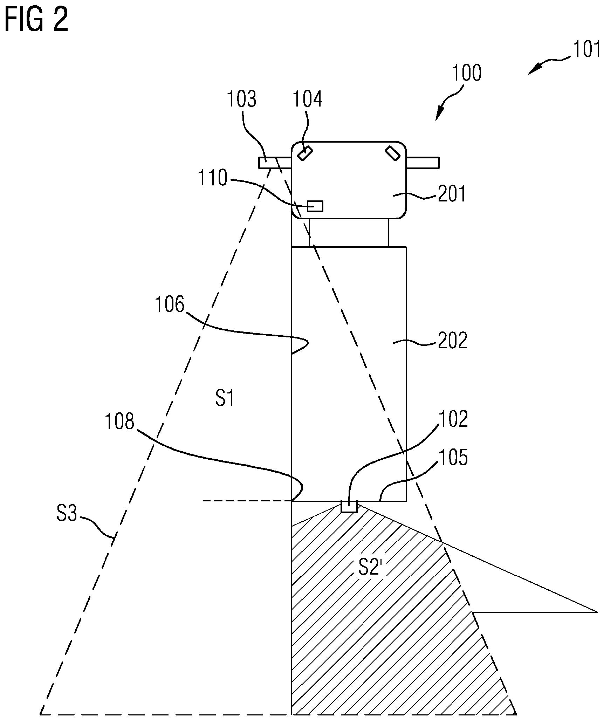

Wie aus Figur 2 ersichtlich, werden die Sichtbereiche S1 und S2 der Kameras 102 und 103 zumindest teilweise zu einem Gesamtsichtbereich S3 zusammengesetzt und auf dem zugehörigen Monitor 104 dargestellt.

In Abhängigkeit von der Fahrzeugtrajektorie, bekannten Parametern des Kraftfahrzeugs 101 wie Länge, Höhe und/oder Breite sowie den bekannten Sichtbereichen S1 und S2 der Kameras 102 und 103 wird ermittelt, wie die Sichtbereiche S1 und S2 zum Gesamtsichtbereich S3 zusammengesetzt werden, um dem Fahrer auch den Bereich an der Rückseite 105 am Monitor 104 einzublenden. Die Zusammensetzung der Sichtbereiche S1 und S2 wird insbesondere in Abhängigkeit von der ermittelten Trajektorie verändert und adaptiert, beispielsweise abhängig vom Knickwinkel zwischen dem Zugfahrzeug 201 und dem Anhänger 202.

Die Datenverbindung zwischen der Kamera 102 und der Vorrichtung 110 erfolgt beispielsweise kabelgebunden mittels eines sogenannten BroadR-Reach-Netzwerks oder drahtlos per drahtlosem lokalen Netzwerk, beispielsweise gemäß einem IEEE802.11 Standard. Bei Verwendung eines drahtlosen Netzwerkes können die Antennen im Kameraarm der Kamera 103 des Spiegelersatzsystems platziert sein.

Das Zusammenfügen der Bilder der unterschiedlichen Kameras 102 und 103 erfolgt insbesondere in der Vorrichtung 110 mittels Stitching. Hierbei können unterschiedliche Sichten am Monitor 104 dargestellt werden. Beispielsweise wird das Bild der Rückfahrkamera zusätzlich zu den herkömmlichen Darstellungen der gesetzlich vorgegebenen Sichtfeldklassen dargestellt. Beispielsweise wird am Monitor 104 die Sichtfeldklasse 4 dargestellt und zusätzlich das Bild der Kamera 102 neben der Sichtfeldklasse 2. Beispielsweise wird das Bild der Kamera 102 neben der Sichtfeldklasse 5 zusätzlich zur Sichtfeldklasse 4 dargestellt. Auch eine teiltransparente Darstellung des Anhängers 202 ist möglich, wie beispielsweise in Figur 2 dargestellt. Hier wird der Sichtbereich S1 der Kamera 103 mit einem Teilbereich S2` des Sichtbereichs S2 der Kamera 102 so ergänzt, dass ein im Vergleich zu herkömmlichen Spiegelersatzsystemen erweiterter Gesamtsichtbereich S3 entsteht. Dieser ermöglicht eine Darstellung auf dem Monitor 104, die eine Sicht durch den Anhänger 202 hindurch simuliert.

Verschiedene Kombinationen der Sichtbereiche S1 und S2 zum Gesamtbereich S3 sind möglich, insbesondere abhängig von einer Fahrsituation beziehungsweise der ermittelten Trajektorie des Kraftfahrzeugs 101. Hierbei ist der Sichtbereich S1 der Kamera 103 beispielsweise so ausgelegt, dass er entlang der Seite 106 des Kraftfahrzeugs 101 und insbesondere des Anhängers 202 fluchtet beziehungsweise diesen minimal noch überdeckt beziehungsweise schneidet. Der Sichtbereich S1 der weiteren Kamera 103 setzt sich beispielsweise aus den Sichtfeldern für die gesetzlichen Sichtfeldklassen 2, 4 und 5 zusammen. Hierfür können auch mehrere Kameras verwendet werden.

Wie in Figur 2 dargestellt, ist mittels der Erweiterung des Sichtfelds S1 durch den Teilbereich S2 eine Darstellung des herkömmlichen Bereichs S1 des Spiegelersatzsystems möglich und gleichzeitig durch die Kombination mit dem Teilbereich S2' auch der Bereich hinter dem Anhänger 202 darstellbar. Dieser wär ohne die Kamera 102 nicht abbildbar. Die beiden Sichtbereiche S1 und S2' werden zu dem Gesamtsichtbereich S3 so kombiniert, als wäre der Gesamtsichtbereich S3 ein einzelnes Sichtfeld mit größerem Öffnungswinkel.

Die Bilder der beiden Kameras 102 und 103 werden so verzerrt, dass ein möglichst gutes Zusammenfügen der Bilder realisierbar ist. Hierzu wird die Lage der jeweiligen Kameras 102 und 103 relativ zueinander und relativ zum Kraftfahrzeug 101 ermittelt. Während des Betriebs, beispielsweise bei Kurvenfahrten, wird beispielsweise entsprechend des Knickwinkels 107 die jeweils geänderte relative Ausrichtung der Kameras 102, 103 zueinander berücksichtigt und das Zusammenfügen der Bilder der Kameras 102 und 103 entsprechend angepasst.

In den Figuren sind die Sichtbereiche schematisch für die Fahrerseite dargestellt. Korrespondierend sind das Verfahren und das System auch für die Beifahrerseite realisierbar.

Figur 3 zeigt eine alternative Zusammensetzung der Sichtbereiche S1 und S2 der Kameras 102 und 103 beziehungsweise von Teilbereichen der Sichtbereiche.

Beispielsweise wird bei gerader Ausrichtung des Kraftfahrzeugs 101, also einem Knickwinkel 107 von 180° ± 5°, ausschließlich das Sichtfeld S1 am Monitor 104 dargestellt. Bei einer Kurvenfahrt verringert sich der Knickwinkel 107. Abhängig von dem Knickwinkel 107 wird nur noch ein Teilbereich S1' des Sichtbereichs S1 dargestellt. Der Teilbereich S1' ist der Bereich des Sichtbereichs S1, der ausgehend von einer Seitenkante 108 des Anhängers 202 nach außen gerichtet ist. Der übrige Teilbereich S1" des Sichtbereichs S1, der lediglich die Seite 106 des Anhängers 202 abbildet, wird nicht für die Darstellung des Gesamtsichtbereichs S3 am Monitor 104 verwendet. Der Bereich S1" wird durch den Teilbereich S2' der Kamera 102 ersetzt, der die Umgebung 111 an der Rückseite 105 abbildet. Somit bleibt der Gesamtsichtbereich S3 stets gleich groß, unabhängig von dem Knickwinkel 107.

Anstatt den Anhänger 202 mittels des Teilsichtbereichs S2' aus dem Gesamtsichtbereich S3 auszublenden, ist es auch möglich, den Anhänger 202 noch darzustellen, jedoch nahezu transparent, wobei die Transparenz beispielsweise einstellbar ist. Es ist auch möglich, die Lage des Anhängers 202 im dargestellten Gesamtsichtbereich S3 farbig transparent zu überlagern. Alternativ oder zusätzlich ist es auch möglich, die Kanten des Anhängers 202 am Monitor 104 mit Linien, beispielsweise als Kasten darzustellen. Alternativ oder zusätzlich ist auch eine Drahtgitteransicht möglich. Es ist auch möglich, ein mittels klassischer Kantendetektion gefiltertes Bild zu überlagern.

Es ist auch möglich, zusätzlich zum Gesamtsichtbereich S3 ohne den Teilbereich S2' den Teilbereich S1" am Monitor 104 abzubilden. Beispielsweise werden die beiden Bereiche S1' und S1" sowie S1' und S2' nebeneinander auf dem Monitor 104 dargestellt. So kann der Fahrer beide Ansichten berücksichtigen.

Es ist auch möglich, den Sichtbereich S2 beziehungsweise S2' zusätzlich zur herkömmlichen Darstellung des Spiegelersatzsystems in einem der beiden unteren Klasse 5 Bereiche am Monitor 104 anzuzeigen.

Alternativ oder zusätzlich wird das Bild der Kamera 102 auf einem eigenen Bereich des Monitors 104 oder einem zusätzlichen Monitor dargestellt. Beispielsweise werden hierzu die Bilder der Kameras 103 des Spiegelersatzsystems als Ergänzung verwendet und eine kombinierte Ansicht beispielsweise auf dem Monitor eines Navigationssystems angezeigt.

Zur Ermittlung der Position der Kamera 102, wenn die Kamera 102 als abnehmbare Kamera ausgebildet ist, werden beispielsweise Bildinhalte der Kameras 102 und 103 verwendet. Wenn die Kameralinse der Kamera 102 einen Winkel größer als 180° abdeckt, werden beispielsweise die beiden Seitenkanten 108 des Anhängers 202 im Bild der Kamera 102 detektiert. Die Kanten einer Seite der Seiten 106 des Kraftfahrzeugs 101 werden ebenfalls beispielsweise in dem Bild der weitern Kamera 103 detektiert. Alternativ oder zusätzlich werden beispielsweise Seitenleuchten 109 in den jeweiligen Bildern der Kameras 102, 103 erkannt. Die Seitenleuchten 109 werden auch hintere Begrenzungsleuchten genannt. Gemäß Ausführungsbeispielen werden die Seitenleuchten 109 während der Ermittlung der Position der Kameras 102, 130 mit einem vorgegebenen Muster angesteuert, um die Seitenleuchten 109 in dem Bild und dem weiteren Bild gut identifizieren zu können. Beispielsweise wird ein vorgegebenes Blinkmuster ausgeführt.

Auch andere Bildinhalte können zur Kalibrierung verwendet werden, beispielsweise Fahrbahnmarkierungen und/oder Kalibrierpunkte und/oder markante Bildinhalte, die einfach zu erkennen sind, in der Umgebung.

Das Kamera-Monitor-System (100) gemäß der Erfindung weist mindestens zwei Kameras auf, die der Rückseite zugeordnet sind, wobei die Kameras als abnehmbare Kameras ausgebildet sind. Das Verfahren der Erfindung umfasst das Ermitteln eines vorgegebenen Bildinhalts in dem jeweiligen Bild der mindestens zwei Kameras, das Ermitteln einer Position der mindestens zwei Kameras relativ zueinander und relativ zu der weiteren Kamera in Abhängigkeit von dem ermittelten Bildinhalt, wobei die beiden Kameras eine Funkverbindung zueinander aufbauen und dann eine der Kameras die Masterrolle übernimmt, sodass eine Positionsbestimmung der beiden Kameras relativ zueinander möglich ist.

Das Kamera-Monitor-System 100 gemäß den beschriebenen Ausführungsbeispielen ermöglicht es, dem Fahrer des Kraftfahrzeugs 101 den Bereich der Umgebung 111 hinter dem Anhänger 202 komfortabel und intuitiv am Monitor 104 darzustellen, der ohne die Kamera 102 herkömmlich nicht einsehbar wäre.

## Patentansprüche

1. Verfahren zum Betreiben eines Kamera-Monitor-Systems (100) für ein Kraftfahrzeug (101) mit einem Anhänger (202), bei dem das Kamera-Monitor-System (100) eine Kamera (102) aufweist, die einer Rückseite (105) des Anhängers (202) zugeordnet ist, sowie eine weitere Kamera (103) aufweist, die einer Längsseite (106) des Kraftfahrzeugs (101) zugeordnet ist, und einen Monitor (104) aufweist zum Darstellen von Bildern der Kameras (102, 103), umfassend:
- Bereitstellen eines Bilds der Kamera (102),
- Bereitstellen eines weiteren Bilds der weiteren Kamera (103),
- Ermitteln eines vorgegebenen Bildinhalts in dem Bild und in dem weiteren Bild,
- Ermitteln eines Gesamtbilds aus dem Bild und dem weiteren Bild in Abhängigkeit von einer ermittelten Trajektorie des Kraftfahrzeugs (101),
- Darstellen des Gesamtbildes auf dem Monitor (104),
**dadurch gekennzeichnet,**
**dass** das Kamera-Monitor-System (100) mindestens zwei Kameras (102) aufweist, die der Rückseite (105) zugeordnet sind, wobei die Kameras (102) als abnehmbare Kameras (102) ausgebildet sind, umfassend:
- Ermitteln eines vorgegebenen Bildinhalts in dem jeweiligen Bild der mindestens zwei Kameras (102),
- Ermitteln einer Position der mindestens zwei Kameras (102) relativ zueinander und relativ zu der weiteren Kamera (103) in Abhängigkeit von dem ermittelten Bildinhalt,
- wobei die beiden Kameras (102) eine Funkverbindung zueinander aufbauen und dann eine der Kameras (102) die Masterrolle übernimmt, sodass eine Positionsbestimmung der beiden Kameras (102) relativ zueinander möglich ist.

2. Verfahren nach Anspruch 1, bei dem das Ermitteln der Trajektorie mindestens eines umfasst aus:
- Ermitteln einer Geschwindigkeit des Kraftfahrzeugs (101),
- Ermitteln eines Lenkwinkels,
- Ermitteln eines Knickwinkels (107) zwischen einem Zugfahrzeug (201) des Kraftfahrzeugs (101) und dem Anhänger (202), und
- Ermitteln einer Gierrate des Anhängers (202).

3. Verfahren nach Anspruch 1 oder 2, bei dem das Ermitteln des Gesamtbildes umfasst:
- Zusammenfügen des Bilds und des weiteren Bilds mittels Stitching.

4. Verfahren nach einem der Ansprüche 1 bis 3, bei dem das Ermitteln des Gesamtbilds umfasst:
- Zusammenfügen des Bilds und des weiteren Bilds, sodass im Gesamtbild ein Gesamtsichtbereich (S3) dargestellt wird, der sich aus einem Sichtbereich (S2, S2') der Kamera (102) und einem Sichtbereich (S1, S2', S1") der weiteren Kamera (103) zusammensetzt.

5. Verfahren nach einem der Ansprüche 1 bis 4, bei dem das Ermitteln des Gesamtbilds umfasst:
- Zusammenfügen des Bilds und des weiteren Bilds, sodass im Gesamtbild ein Gesamtsichtbereich (S3) dargestellt wird, der sich aus einem Sichtbereich (S2, S2') der Kamera (102) und einem Teilbereich (S1') des Sichtbereichs (S1) der weiteren Kamera (103) zusammensetzt.

6. Verfahren nach einem der Ansprüche 1 bis 5, bei dem das Ermitteln des Bildinhalts mindestens eines umfasst aus:
- Ermitteln von Seitenkanten (108) des Anhängers (202) in dem Bild und dem weiteren Bild, und
- Ermitteln von Seitenleuchten (109) des Anhängers (202) in dem Bild und dem weiteren Bild.

7. Vorrichtung für ein Kraftfahrzeug (101) mit einem Anhänger (202), die ausgebildet ist, ein Verfahren nach einem der Ansprüche 1 bis 6 auszuführen.

8. Kamera-Monitor-System (100) für ein Kraftfahrzeug (101) mit einem Anhänger (202), aufweisend:
- eine Vorrichtung (110) nach Anspruch 7,
- zwei Kameras (102), die einer Rückseite (105) des Anhängers (202) zugeordnet sind, wobei die Kameras (102) als abnehmbare Kameras (102) ausgebildet sind,
- eine weitere Kamera (103), die einer Längsseite (106) des Kraftfahrzeugs (101) zugeordnet ist,
- einen Monitor (104) zum Darstellen von Bildern der Kameras (102, 103).

## Claims

1. Method for operating a camera monitor system (100) for a motor vehicle (101) with a trailer (202), in which the camera monitor system (100) has a camera (102), which is assigned to a rear side (105) of the trailer (202), and a further camera (103), which is assigned to a longitudinal side (106) of the motor vehicle (101), and a monitor (104) for presenting images of the cameras (102, 103), comprising:
- providing an image of the camera (102),
- providing a further image of the further camera (103),
- ascertaining a specified image content in the image and in the further image,
- ascertaining an overall image comprising the image and the further image in dependence on an ascertained trajectory of the motor vehicle (101),
- presenting the overall image on the monitor (104),
**characterized**
**in that** the camera monitor system (100) has at least two cameras (102) assigned to the rear side (105), wherein the cameras (102) are embodied as removable cameras (102), comprising:
- ascertaining a specified image content in the respective image of the at least two cameras (102),
- ascertaining a position of the at least two cameras (102) relative to one another and relative to the further camera (103) in dependence on the ascertained image content,
- wherein the two cameras (102) establish a radio connection to one another and then one of the cameras (102) assumes the master role, so that a position determination of the two cameras (102) relative to one another is possible.

2. Method according to Claim 1, in which ascertaining the trajectory comprises at least one of:
- ascertaining a speed of the motor vehicle (101),
- ascertaining a steering angle,
- ascertaining an articulation angle (107) between a towing vehicle (201) of the motor vehicle (101) and the trailer (202), and
- ascertaining a yaw rate of the trailer (202).

3. Method according to Claim 1 or 2, in which ascertaining the overall image comprises:
- combining the image and the further image by way of stitching.

4. Method according to one of Claims 1 to 3, in which ascertaining the overall image comprises:
- combining the image and the further image such that a total field of view (S3) that is composed of a field of view (S2, S2') of the camera (102) and a field of view (S1, S2', S1") of the further camera (103) is presented in the overall image.

5. Method according to one of Claims 1 to 4, in which ascertaining the overall image comprises:
- combining the image and the further image such that a total field of view (S3) that is composed of a field of view (S2, S2') of the camera (102) and a partial region (S1') of the field of view (S1) of the further camera (103) is presented in the overall image.

6. Method according to one of Claims 1 to 5, in which ascertaining the image content comprises at least one of:
- ascertaining side edges (108) of the trailer (202) in the image and the further image, and
- ascertaining side lamps (109) of the trailer (202) in the image and the further image.

7. Device for a motor vehicle (101) with a trailer (202), the device being designed to carry out a method according to one of Claims 1 to 6.

8. Camera monitor system (100) for a motor vehicle (101) with a trailer (202), having:
- a device (110) according to Claim 7,
- two cameras (102) assigned to a rear side (105) of the trailer (202), wherein the cameras (102) are embodied as removable cameras (102),
- a further camera (103), which is assigned to a longitudinal side (106) of the motor vehicle (101),
- a monitor (104) for presenting images of the cameras (102, 103).

## Revendications

1. Procédé permettant de faire fonctionner un système caméra-moniteur (100) destiné à un véhicule automobile (101) pourvu d'une remorque (202), le système caméra-moniteur (100) présentant une caméra (102) qui est associée à une face arrière (105) de la remorque (202), ainsi qu'une caméra supplémentaire (103) qui est associée à une face longitudinale (106) du véhicule automobile (101), et présente un moniteur (104) pour représenter des images des caméras (102, 103), comprenant les étapes consistant à :
- fournir une image de la caméra (102),
- fournir une image supplémentaire de la caméra supplémentaire (103),
- déterminer un contenu d'image prédéfini sur l'image et sur l'image supplémentaire,
- déterminer une image globale à partir de l'image et de l'image supplémentaire en fonction d'une trajectoire déterminée du véhicule automobile (101),
- représenter l'image globale sur le moniteur (104),
**caractérisé**
**en ce que** le système caméra-moniteur (100) présente au moins deux caméras (102) qui sont associées à la face arrière (105), les caméras (102) étant réalisées sous forme de caméras (102) amovibles, comprenant les étapes consistant à :
- déterminer un contenu d'image prédéfini sur l'image respective des au moins deux caméras (102),
- déterminer une position des au moins deux caméras (102) l'une par rapport à l'autre et par rapport à la caméra supplémentaire (103) en fonction du contenu d'image déterminé,
- dans lequel les deux caméras (102) établissent une liaison radio entre elles, et ensuite l'une des caméras (102) joue de rôle de maître de sorte qu'une détection de position des deux caméras (102) l'une par rapport à l'autre est possible.

2. Procédé selon la revendication 1, dans lequel la détermination de la trajectoire comprend au moins l'une des étapes parmi :
- la détermination d'une vitesse du véhicule automobile (101),
- la détermination d'un angle de braquage,
- la détermination d'un angle de cassure (107) entre un véhicule tracteur (201) du véhicule automobile (101) et la remorque (202), et
- la détermination d'un taux de lacet de la remorque (202).

3. Procédé selon la revendication 1 ou 2, dans lequel la détermination de l'image entière comprend :
- la fusion de l'image et de l'image supplémentaire par assemblage.

4. Procédé selon l'une quelconque des revendications 1 à 3, dans lequel la détermination de l'image globale comprend :
- la fusion de l'image et de l'image supplémentaire de sorte que sur l'image globale est représenté un champ de vision global (S3) qui est composé d'un champ de vision (S2, S2') de la caméra (102) et d'un champ de vision (S1, S2', S1") de la caméra supplémentaire (103).

5. Procédé selon l'une quelconque des revendications 1 à 4, dans lequel la détermination de l'image globale comprend :
- la fusion de l'image et de l'image supplémentaire de sorte que sur l'image globale est représenté un champ de vision global (S3) qui est composé d'un champ de vision (S2, S2') de la caméra (102) et d'une zone partielle (S1') du champ de vision (S1) de la caméra supplémentaire (103).

6. Procédé selon l'une quelconque des revendications 1 à 5, dans lequel la détermination du contenu d'image comprend au moins une étape parmi :
- la détermination des bords latéraux (108) de la remorque (202) sur l'image et l'image supplémentaire, et
- la détermination des feux latéraux (109) de la remorque (202) sur l'image et l'image supplémentaire.

7. Dispositif destiné à un véhicule automobile (101) pourvu d'une remorque (202), qui est réalisé pour exécuter un procédé selon l'une quelconque des revendications 1 à 6.

8. Système caméra-moniteur (100) destiné à un véhicule automobile (101) pourvu d'une remorque (202), présentant :
- un dispositif (110) selon la revendication 7,
- deux caméras (102) qui sont associées à une face arrière (105) de la remorque (202), les caméras (102) étant réalisées sous forme de caméras amovibles (102),
- une caméra supplémentaire (103) qui est associée à une face longitudinale (106) du véhicule automobile (101),
- un moniteur (104) pour représenter des images des caméras (102, 103).
